# EUROPEAN PATENT APPLICATION

(11) **EP 2 226 708 A1**
(43) Date of publication of application: **08.09.2010**
(21) Application number: 08866237.4
(22) Date of filing: 26.12.2008
(51) Int. Cl.: G06F 3/041, G06F 3/042, G09F 9/30, H04N 1/028, H04N 5/335

(54) **DISPLAY PANEL WITH BUILT-IN OPTICAL SENSORS AND DISPLAY DEVICE USING SAME**

(30) Priority: 28.12.2007 JP 2007340990
(71) Applicant: Sharp Kabushiki Kaisha, Osaka-shi, Osaka 545-8522 (JP)
(72) Inventor: UEHATA, Masaki, Osaka-shi, Osaka 545-8522 (JP); GOTOH, Toshimitsu, Osaka-shi, Osaka 545-8522 (JP); FUJIOKA, Akizumi, Osaka-shi, Osaka 545-8522 (JP); MAEDA, Kazuhiro, Osaka-shi, Osaka 545-8522 (JP); YOSHIDA, Keisuke, Osaka-shi, Osaka 545-8522 (JP)
(74) Representative: Goddar, Heinz J.
(86) International application number: PCT/JP2008/073729
(87) International publication number: WO 2009/084629

(57) **Abstract**

A display panel with built-in optical sensors is provided that can accurately remove a noise component in an imaging signal of an image pick-up sensor in a display region without being influenced by distance from a heat source or distance from a sensor output terminal. The display panel with built-in optical sensors has an active matrix substrate having a pixel region in which pixels are disposed in a matrix, and is configured such that optical sensors are formed in at least a portion of the pixel region. Among the optical sensors in the pixel region are image pick-up sensors (12S) and light-shielded sensors (12B) that are shielded from light. The display panel with built-in optical sensors further includes a correction circuit (4) that corrects sensor output of the image pick-up sensors (12S) with use of sensor output from the light-shielded sensors (12B).

## Description

### Technical Field

The present invention relates to a display panel with built-in optical sensors having photodetection elements such as photodiodes in pixels and that can be utilized as a scanner or touch panel, and a display device using the same.

### Background Art

Conventionally, a display device with an image pick-up function has been proposed that can pick up an image of an object near the display due to including photodetection elements such as photodiodes in a pixel region (e.g., see JP 2007-81870A). The photodetection elements in the pixel region are formed on an active matrix substrate at the same time as well-known constituent elements such as signal lines, scan lines, TFTs (Thin Film Transistor), and pixel electrodes are formed using a well-known semiconductor process. Such display devices with an image pick-up function are envisioned to be used as display devices for bidirectional communication and display devices with a touch panel function.

In general, the output of photodetection elements such as photodiodes includes noise components due to various types of influence such as changes in the environmental temperature and the parasitic capacitance of signal wiring. In particular, in the case of photodiodes, the output current changes according to changes in the ambient temperature. In view of this, the aforementioned patent document 1 discloses a configuration in which light-shielded sensors are provided outside the pixel region in order to detect noise components. Light-shielded sensors are the same elements as the photodetection elements in the pixel region, but their light receiving faces are shielded so that light is not incident thereon. Since these light receiving faces are shielded from light, fluctuations in the output from the light-shielded sensors express noise components arising from changes in the environmental temperature and other influences. Accordingly, correcting the output of the photodetection elements in the pixel region with use of the output of the light-shielded sensors obtains sensor output in which the influence of noise components has been reduced.

In the conventional display device disclosed in JP 2007-81870A, light-shielded sensors are provided outside a display region along at least one of the four sides of the display region, as shown in FIGS. 1, 3, and 5 of JP 2007-81870A. Output signals of the light-shielded sensors are then used to correct imaging signals of image pick-up sensors disposed in the same rows or columns. For example, in the configuration disclosed in FIG. 1 of JP 2007-81870A, the output signal from the light-shielded sensor in the first row is subtracted from the imaging signal of the image pick-up sensor disposed in the first row of the display region, thus obtaining an imaging signal from which noise components have been removed.

### Disclosure of Invention

### Problem to be Solved by the Invention

However, the temperature distribution is not necessarily uniform in the display region. For example, the main heat sources in the display device are the backlight light source and driving circuits (amplifiers, etc.). Specifically, the display region has a temperature gradient according to, for example, distance from the heat sources and differences between the thermal conductivity of constituent members. For this reason, in general, image pick-up sensors in the vicinity of these heat sources are readily influenced by heat generated by the heat sources. On the other hand, the heat sources have little influence on the image pick-up sensors at positions farther away from the heat sources. Also, in the case of using the display panel with built-in optical sensors as a touch panel, if the temperature of a finger is higher than the surface temperature of the panel, the temperature of the place touched by the finger will become higher than places not touched by the finger. Conversely, if the temperature of the finger is lower than the surface temperature of the panel, the temperature of the place touched by the finger will become lower than places not touched by the finger. Accordingly, the aforementioned conventional display device has the problem that noise components cannot be accurately removed in cases in which, for example, the distance from a heat source to an image pick-up sensor targeted for correction is different from the distance from the heat source to a light-shielded sensor, or the finger is touching a place above an image pick-up sensor but not touching a place above a light-shielded sensor. Also, there is the problem that since the parasitic capacitance of wiring and the like are also part of noise components, noise components originating from the parasitic capacitance of wiring cannot be accurately removed by merely subtracting an output signal from a light-shielded sensor from the imaging signals of image pick-up sensors that have different wiring distances from the sensor output terminal.

The present invention has been achieved in light of such problems, and an object thereof is to provide a display panel with built-in optical sensors that can accurately remove a noise component in an imaging signal of an image pick-up sensor in a display region without being influenced by distance from a heat source, or distance from an area touched by a finger or from a sensor output terminal, and a display device using the same.

### Means for Solving Problem

In order to achieve the aforementioned object, a display panel with built-in optical sensors according to the present invention is a display panel with built-in optical sensors that has an active matrix substrate having a pixel region in which pixels are disposed in a matrix, optical sensors being formed in at least a portion of the pixel region, wherein among the optical sensors in the pixel region are image pick-up sensors and light-shielded sensors that are shielded from light, and the display panel with built-in optical sensors further includes a correction circuit that corrects sensor output of the image pick-up sensors with use of sensor output from the light-shielded sensors. Note that the correction circuit may be disposed in the panel (on the active matrix substrate), or may be disposed outside the panel.

### Effects of the Invention

According to the present invention, it is possible to provide a display panel with built-in optical sensors that can accurately remove a noise component in an imaging signal of an image pick-up sensor in a display region without being influenced by distance from a heat source, or distance from an area touched by a finger or from a sensor output terminal, and a display device using the same.

### Brief Description of Drawings

[FIG. 1] FIG. 1 is a block diagram showing a schematic configuration of an active matrix substrate that is included in a display panel with built-in optical sensors according to an embodiment of the present invention.
[FIG. 2A] FIG. 2A is a plan view showing a schematic configuration of a sensing pixel in a pixel region.
[FIG. 2B] FIG. 2B is a cross-sectional view taken along an arrow A-A' in FIG. 2A.
[FIG. 3A] FIG. 3A is a plan view showing a schematic configuration of a light-shielded sensor pixel in the pixel region.
[FIG. 3B] FIG. 3B is a cross-sectional view taken along an arrow A-A' in FIG. 3A.
[FIG. 4] FIG. 4 is an equivalent circuit diagram of an optical sensor according to an embodiment of the present invention.
[FIG. 5] FIG. 5 is a schematic diagram showing an exemplary disposition of sensing pixels and light-shielded sensor pixels in an embodiment of the present invention.
[FIG. 6A] FIG. 6A is a circuit diagram showing a configuration of a circuit for correcting sensor output of sensing pixels in the pixel disposition configuration shown in FIG. 5.
[FIG. 6B] FIG. 6B is a timing chart showing on/off timings of switches shown in FIG. 6A.
[FIG. 7A] FIG. 7A is a cross-sectional diagram showing an exemplary configuration of a display panel with built-in optical sensors according to an embodiment of the present invention.
[FIG. 7B] FIG. 7B is a cross-sectional diagram showing an exemplary configuration of a display panel with built-in optical sensors according to an embodiment of the present invention.
[FIG. 8] FIG. 8 is a schematic diagram showing another exemplary disposition of sensing pixels and light-shielded sensor pixels in an embodiment of the present invention.
[FIG. 9] FIG. 9 is a circuit diagram showing an exemplary configuration of a circuit for correcting sensor output of sensing pixels in the pixel disposition configuration shown in FIG. 8.
[FIG.10] FIG.10 is a schematic diagram showing yet another exemplary disposition of sensing pixels and light-shielded sensor pixels in an embodiment of the present invention.
[FIG. 11] FIG. 11 is a circuit diagram showing an exemplary configuration of a circuit for correcting sensor output of sensing pixels in the pixel disposition configuration shown in FIG. 10.
[FIG. 12] FIG.12 is a circuit diagram showing another exemplary configuration of a circuit for correcting sensor output of sensing pixels in the pixel disposition configuration shown in FIG. 10.
[FIG. 13A] FIG. 13A is a plan view showing a schematic configuration of a light-shielded sensor pixel in a pixel region.
[FIG. 13B] FIG. 13B is a cross-sectional view taken along an arrow A-A' in FIG. 13A.

### Description of the Invention

A display panel with built-in optical sensors according to an embodiment of the present invention is a display panel with built-in optical sensors that has an active matrix substrate having a pixel region in which pixels are disposed in a matrix, optical sensors being formed in at least a portion of the pixel region, wherein among the optical sensors in the pixel region are image pick-up sensors and light-shielded sensors that are shielded from light, and the display panel with built-in optical sensors further includes a correction circuit that corrects sensor output of the image pick-up sensors with use of sensor output from the light-shielded sensors. Note that the correction circuit may be disposed in the panel (on the active matrix substrate), or may be disposed outside the panel.

Also, in the display panel with built-in optical sensors according to the embodiment of the present invention, it is preferable that the light-shielded sensors are disposed having predetermined regularity in the pixel region, and the correction circuit corrects sensor output of the image pick-up sensors with use of sensor output of light-shielded sensors disposed within a predetermined range in a vicinity of the image pick-up sensors.

In the display panel with built-in optical sensors according to the embodiment of the present invention, it is preferable that the light-shielded sensors are disposed in predetermined rows or columns in the pixel region, and the correction circuit corrects sensor output of the image pick-up sensors with use of sensor output of light-shielded sensors disposed in a predetermined row or column in the vicinity of the image pick-up sensors.

In the display panel with built-in optical sensors according to the embodiment of the present invention, it is preferable that the image pick-up sensors and the light-shielded sensors are disposed in alternating columns in the pixel region, and the correction circuit corrects sensor output of the image pick-up sensors with use of sensor output of light-shielded sensors disposed in a column adjacent to the image pick-up sensors.

In the display panel with built-in optical sensors according to the embodiment of the present invention, it is preferable that the image pick-up sensors and the light-shielded sensors are disposed in alternating rows in the pixel region, and the correction circuit corrects sensor output of the image pick-up sensors with use of sensor output of light-shielded sensors disposed in a row adjacent to the image pick-up sensors.

In the display panel with built-in optical sensors according to the embodiment of the present invention, it is preferable that the image pick-up sensors and the light-shielded sensors are disposed so as to alternate in both a row direction and a column direction in the pixel region, and the correction circuit corrects sensor output of the image pick-up sensors with use of sensor output from at least any of light-shielded sensors that are adjacent to the image pick-up sensors.

Below is a description of more specific embodiments of the present invention with reference to the drawings. Note that although an exemplary configuration in the case in which a display device according to the present invention is implemented as a liquid crystal display device is described in the following embodiments, the display device according to the present invention is not limited to a liquid crystal display device, but instead is applicable to an arbitrary display device that uses an active matrix substrate. Note that due to having an image pick-up function, the display device according to the present invention is envisioned to be used as a display device with a touch panel in which input operations are performed by detecting an object near the screen, a scanner that reads an image of a document or the like that is placed on the screen, a display device for bidirectional communication that is equipped with a display function and an imaging function, or the like.

Also, for the sake of convenience in the description, the drawings referenced below have been simplified so as to show only main members that are necessary for describing the present invention, among the constituent members of the embodiments of the present invention. Accordingly, the display device according to the present invention can include arbitrary constituent members that are not shown in the drawings referenced in the present specification. Also, the dimensions of the members in the drawings are not shown faithfully to the actual dimensions of the constituent members, the ratio of dimensions between the members, and the like.

### Embodiment 1

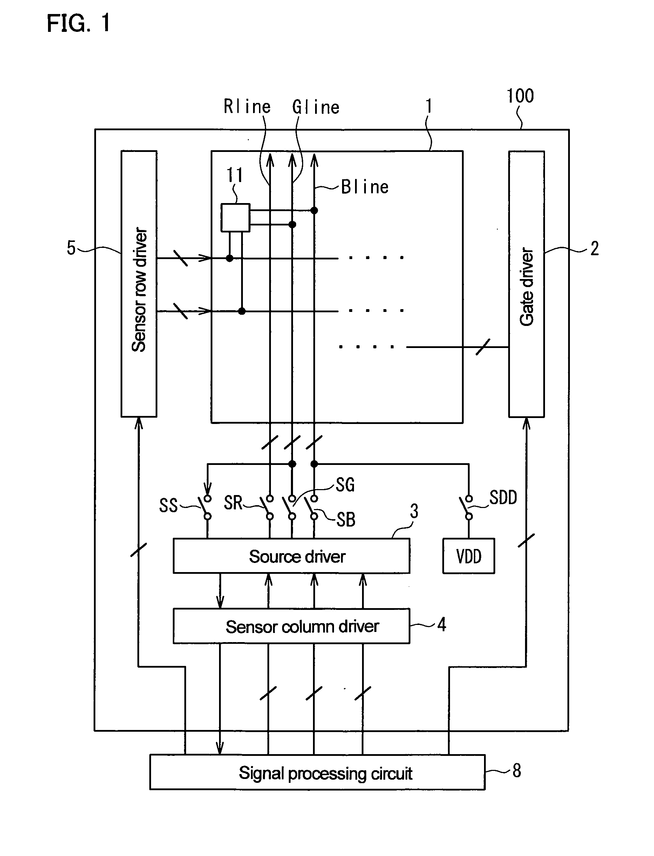

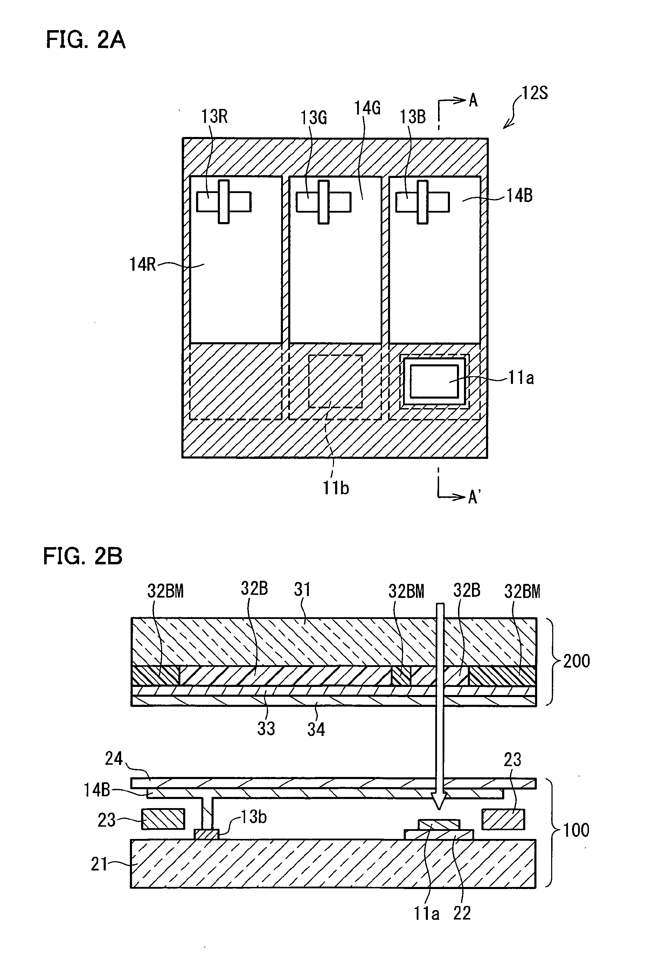

First is a description of a configuration of a display panel with built-in optical sensors that is included in a liquid crystal display device according to Embodiment 1 of the present invention with reference to FIGS. 1 and 2.

FIG. 1 is a block diagram showing a schematic configuration of an active matrix substrate 100 that is included in the display panel with built-in optical sensors according to the present embodiment. As shown in FIG. 1, the active matrix substrate 100 includes, on a glass substrate (not shown), at least a pixel region 1 in which pixels are disposed in a matrix, a display gate driver 2, a display source driver 3, a sensor column driver 4, and a sensor row driver 5. Also, a signal processing circuit 8 for generating a signal for driving the pixels in the pixel region 1 and for processing sensor output from an optical sensor 11 in the pixel region 1 is connected to the active matrix substrate 100 via an FPC connector and an FPC (neither of which is shown).

The aforementioned constituent members on the active matrix substrate 100 can also be formed monolithically on a glass substrate by a semiconductor process. Alternatively, a configuration is possible in which amplifiers and the drivers among the aforementioned constituent elements are implemented on a glass substrate by COG (Chip On Glass) technology or the like. As another alternative, at least a portion of the aforementioned constituent members shown on the active matrix substrate 100 in FIG. 1 can be mounted on the FPC.

The pixel region 1 is a region where a plurality of pixels are disposed in a matrix. In the present embodiment, one optical sensor 11 is provided in each of the pixels in the pixel region 1. It should be noted that the pixel region 1 in the present embodiment has pixels configured such that light is incident on the optical sensor 11 (hereinafter, referred to as a "sensing pixel"), and pixels shielded from light such that light is not incident on the optical sensor 11 (hereinafter, referred to as a "light-shielded sensor pixel").

FIG. 2A is a plan view showing a schematic configuration of a sensing pixel 12S in the pixel region 1. FIG. 2B is a cross-sectional view taken along an arrow A-A' in FIG. 2A. In the example shown in FIG. 2A, the sensing pixel 12S is formed by three picture elements, namely a red picture element, a green picture element, and a blue picture element. The red picture element has a TFT 13R and a pixel electrode 14R that is driven by the TFT 13R. A red color filter is disposed in a layer above the pixel electrode 14R. Similarly, the green picture element has a pixel electrode 14G that is driven by a TFT 13G, and a green color filter is disposed in a layer above the pixel electrode 14G. Also, the blue picture element has a pixel electrode 14B that is driven by a TFT 13B, and a blue color filter 32B (see FIG. 2B) is disposed in a layer above the pixel electrode 14B.

In the pixel 12, a photodiode 11a that is the photodetection element of the optical sensor 11 is formed in the blue picture element. Also, an output circuit 11b (described in detail later) for reading an electrical charge from the photodiode 11a and generating sensor output is formed in the green pixel. The photodiode 11a is formed on the active matrix substrate 100 at the same time as the TFTs 13R, 13G, and 13B, by the semiconductor process for forming these TFTs. Note that although FIG. 2A shows an exemplary structure in which the photodiode 11a is formed in the blue picture element and the output circuit 16 is formed in the green picture element, the photodiode 11a may be formed in any picture element in the sensing pixel 12S.

Note that as shown in FIG. 2B, the photodiode 11a is formed on a glass substrate 21 of the active matrix substrate 100, with a light shielding layer 22 therebetween. The light shielding layer 22 is provided in order to prevent light from a backlight (not shown) disposed on the back face of the glass substrate 21 from being incident on the photodiode 11a.

In FIG. 2B, 23 denotes a gate metal, and 24 denotes an insulating film. The active matrix substrate 100 is attached to a counter substrate 200 having a counter electrode 33 and an oriented film 34 formed on the entire face thereof, and a liquid crystal material (not shown) is enclosed in the gap therebetween. The counter substrate 200 has, on a glass substrate 31, a color filter layer 32 that is configured by a black matrix 32BM and a blue color filter 32B. As shown in FIGS. 2A and 2B, in the blue picture element, the black matrix 32BM covers regions other than a pixel aperture part and the photodiode 11a. Also, as shown in FIG. 2A, in the red picture element and the green picture element, the black matrix covers regions other than the pixel aperture part.

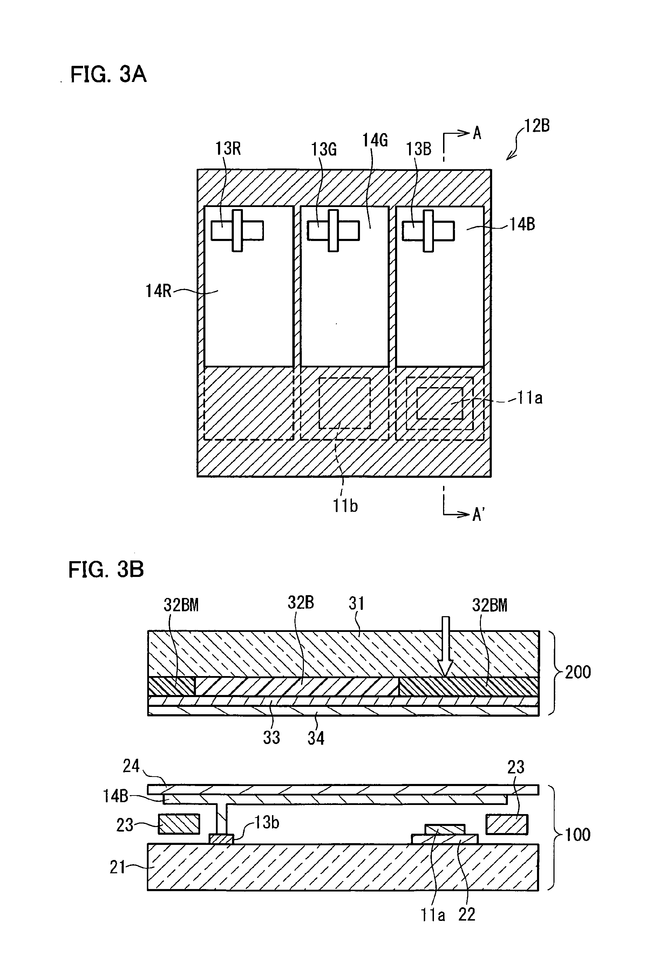

Meanwhile, FIG. 3A is a plan view showing a schematic configuration of a light-shielded sensor pixel 12B in the pixel region 1. FIG. 3B is a cross-sectional view taken along an arrow A-A' in FIG. 3A. A comparison of FIGS. 2 and 3 shows that the light-shielded sensor pixel 12B differs from the sensing pixel 12S only in that the top of the photodiode 11a is covered by the black matrix 32BM. Other aspects of the configuration of the light-shielded sensor pixel 12B are the same as the sensing pixel 12S. As shown in FIG. 3B, since the top of the photodiode 11a is covered by the black matrix 32BM in the light-shielded sensor pixel 12B, light that has entered from the counter substrate 200 side is not incident on the photodiode 11a.

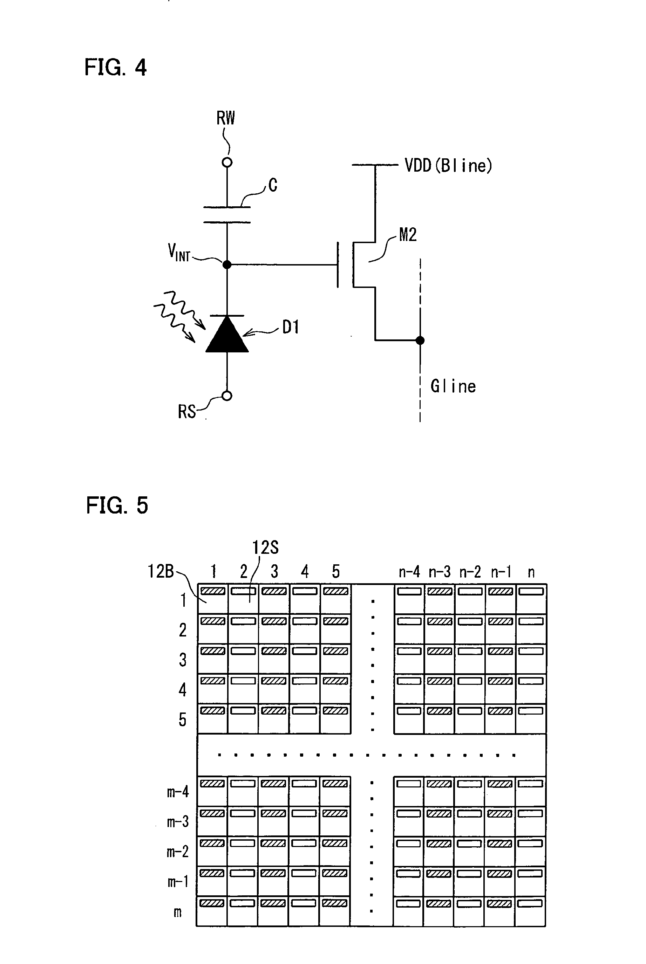

Now a description will be given of the structure and operation of the optical sensor 11 that is provided in each pixel (the sensing pixels 12S and the light-shielded sensor pixels 12B) in the pixel region 1 with reference to FIGS. 1 and 4. FIG. 4 is an equivalent circuit diagram of the optical sensor 11. The structure of the optical sensor 11 is common to the sensing pixel 12S and the light-shielded sensor pixel 12B, and as shown in FIG. 4, the optical sensor 11 has a photodiode D1 (the photodiode 11a shown in FIGS. 2 and 3), a capacitor C, and a sensor preamplifier M2. Specifically, the capacitor C and the sensor preamplifier M2 are included in the output circuits 11b shown in FIGS. 2A and 3A. The anode of the photodiode D1 is connected to the sensor row driver 5 via a reset line RS. The cathode of the photodiode D1 is connected to one of the electrodes of the capacitor C. The other electrode of the capacitor C is connected to the sensor row driver 5 via a readout signal line RW Note that the number of pairs of reset lines RS and readout signal lines RW is equal to the number of pixels in the row direction in the pixel region 1.

As shown in FIGS. 1 and 4, the cathode of the photodiode D1 is connected to the gate of the sensor preamplifier M2. The source of the sensor preamplifier M2 is connected to a source line Bline for driving the blue picture element (described later). The drain of the sensor preamplifier M2 is connected to a source line Gline for driving the green picture element (described later). In a writing period for the picture elements, switches SR, SG, and SB that carry output from the source driver 3 to a source line Rline for driving the red picture element (described later) and the source lines Gline and Bline are turned on, and a switch SS and a switch SDD are turned off. Accordingly, image signals from the source driver 3 are written to the picture elements. On the other hand, in a predetermined period (sensing period) between writing periods, the switches SR, SG, and SB are turned off, and the switch SS and the switch SDD are turned on. The switch SS connects the drain of the sensor preamplifier M2 and the source line Gline to the sensor column driver 4. The switch SDD connects a constant voltage source VDD to the Bline. Note that although an example of a configuration in which the source lines Gline and Bline also play the role of driving lines for the sensor preamplifier M2 is shown in FIGS. 1 and 4, which source lines are used as the driving lines for the sensor preamplifier M2 is arbitrary design matter. Also, instead of the source lines also playing the role of driving lines for the sensor amplifier M2, a configuration is possible in which a driving line for the sensor preamplifier M2 is provided separately from the source lines.

In the optical sensor 11, the sensing period is started due to the supply of a reset signal from the reset line RS. After the start of sensing, a potential VINT of the cathode of the photodiode D1 in the sensing pixel 12S decreases according to the amount of received light. Thereafter, due to the supply of a readout signal from the readout signal line RW, the potential VINT of the cathode of the photodiode D1 at that time is read out, and is then amplified by the sensor amplifier M2. On the other hand, as shown in FIGS. 3A and 3B, the photodiode D1 in the light-shielded pixel 12B is shielded from light by the black matrix 32BM, and therefore fluctuations in the potential VINT of the cathode of the photodiode D1 in the light-shielded pixel 12B represent a component of changes in the characteristics of the photodiode D1 that accompany changes in the environmental temperature.

The output (sensor output) from the sensor preamplifier M2 is sent to the sensor column driver 4 via the signal line Gline. The sensor column driver 4 further amplifies the sensor output, and outputs the resulting sensor output to the signal processing circuit 8.

Here, FIG. 5 shows a disposition of the sensing pixels 12S (see FIGS. 2A and 2B) and the light-shielded sensor pixels 12B (see FIGS. 3A and 3B) in the pixel region 1 in the present embodiment. In FIG. 5, each rectangle expresses one pixel composed of three picture elements. Also, in FIG. 5, the photodiode 11a of each sensing pixel 12S is illustratively expressed as a small empty rectangle within the rectangle representing the pixel, and the photodiode 11a that is shielded from light in each light-shielded sensor pixel 12B is illustratively expressed as a small hatched rectangle within the rectangle expressing the pixel.

As shown in FIG. 5, the pixel region 1 of the display panel with built-in optical sensors of the present embodiment is provided with pixels in m rows in the vertical direction and n columns in the horizontal direction. The light-shielded sensor pixels 12B are disposed in odd-numbered columns (column 1, column 3, column 5, ...) and the sensing pixels 12S are disposed in even-numbered columns (column 2, column 4, column 6, ...). In this configuration, sensor output from the light-shielded sensor pixels 12B disposed in an odd-numbered column is used to remove noise in sensor output of the sensing pixels 12S in an adjacent even-numbered column.

Here, sensor output from each pixel in the pixel region 1 is expressed as S(x,y), where x (x=1 to n) is the column number and y (y=1 to m) in the row number. In the present embodiment, sensor output S(2k,y) from the sensing pixels 12S in the even-numbered column (column 2k) is corrected by subtracting, from sensor output S(2k,y) from the sensing pixels 12S in the even-numbered column (column 2k), sensor output S(2k-1,y) from the light-shielded sensor pixels 12B in the odd-numbered column (column 2k-1) that is adjacent thereto.

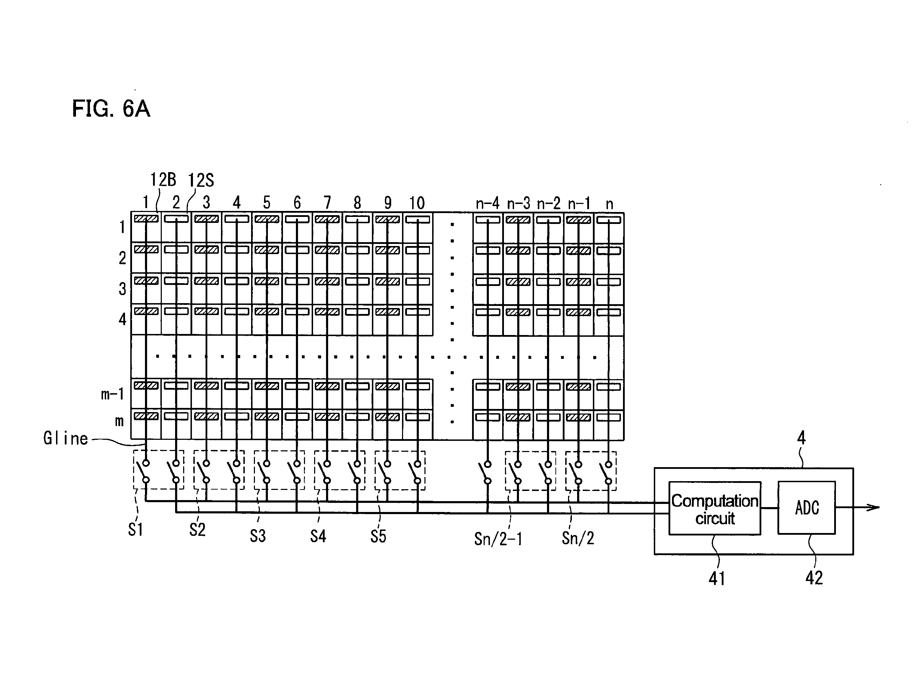

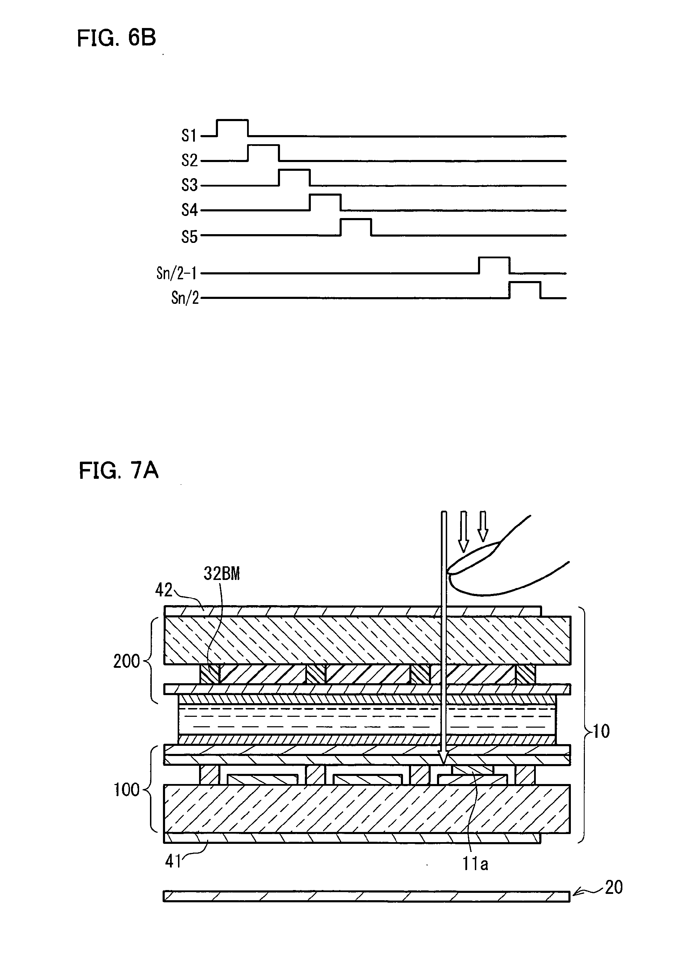

For this reason, as shown in FIG. 6A, in the present embodiment, switches Sk (k=1 to n/2) are provided for sequentially selecting a pair of a source line Gline (see FIG. 1) functioning as the sensor output line of the light-shielded sensor pixels 12B in the odd-numbered column (column (2k-1)) and a source line Gline functioning as the sensor output line of the sensing pixels 12S in the even-numbered column (column 2k) that is adjacent thereto. Specifically, as shown in FIG. 6B, the switches S2, S3, ... S_{n/2} are in the off state when the switch S1 is on, and when the switch S2 is turned on next, the switches S1, S3, ... S_{n/2} are off. Accordingly, the sensor output S(2k,y) and S(2k-1,y) is output to the sensor column driver 4 from the pixels on the two source lines Gline that are connected to the switch Sk that is on, according to the row selection performed by the source row driver 5 (see FIG. 1).

As shown in FIG. 6A, the sensor column driver 4 is internally provided with a computation circuit 41 and an AD convertor (ADC) 42. The computation circuit 41 subtracts, from sensor output S(2k,y) from the sensing pixels 12S in the even-numbered column (column 2k), sensor output S(2k-1,y) from the light-shielded sensor pixels 12B in the odd-numbered column (column 2k-1) that is adjacent thereto, as described above. The result of the subtraction is converted into a digital signal by the AD convertor 42 and then output to the signal processing circuit 8 (see FIG.1).

As described above, according to the present embodiment, sensor output from the light-shielded sensor pixels 12B in an odd-numbered column is subtracted from sensor output from the sensing pixels 12S disposed in an even-numbered column that is adjacent thereto, thus correcting the sensor output of the sensing pixels 12S. Accordingly, noise removal can be performed using output from a light-shielded sensor that is disposed very close to the sensing pixel 12S that is the correction target, thus enabling accurately removing noise components in sensor output from sensing pixels without being influenced by distance from a heat source or distance from a sensor output terminal.

Note that although FIG. 6 shows an example of a configuration in which subtraction processing is performed by the computation circuit 41, and thereafter conversion to a digital signal is performed by the AD convertor 42, the connection sequence of the computation circuit 41 and the AD convertor 42 may be reversed.

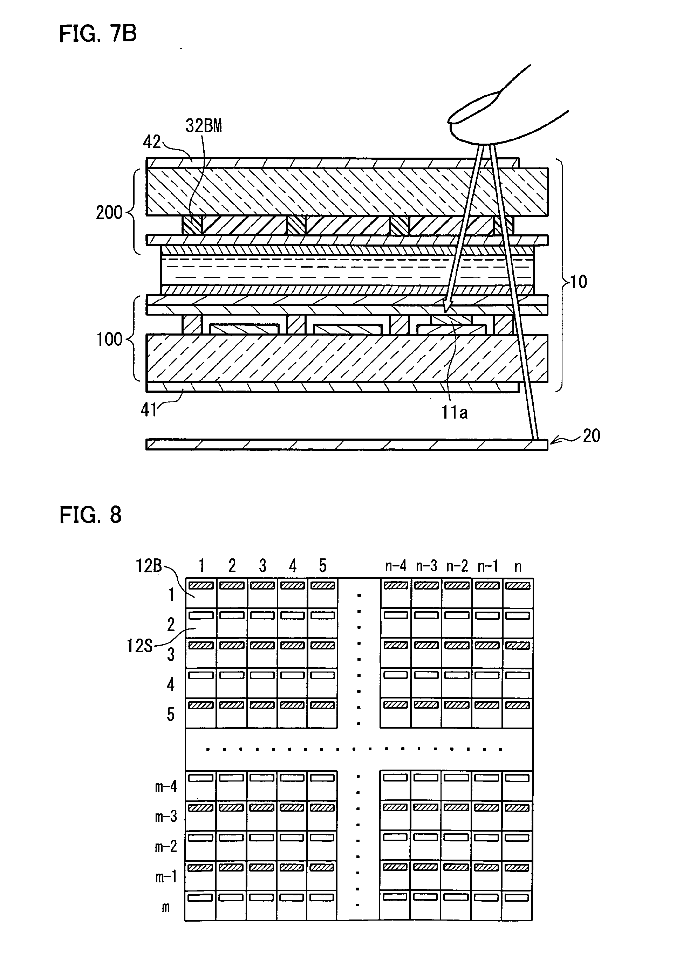

Note that as shown in FIGS. 7A and 7B, a display panel with built-in optical sensors 10 according to the present embodiment described above is configured by attaching the active matrix substrate 100 to the counter substrate 200, and filling the gap therebetween with liquid crystal. A backlight 20 is disposed on the back face of the display panel with built-in optical sensors 10, thus configuring a transmissive-type liquid crystal display device. Note that a pair of polarizing plates 41 and 42 that function as a polarizer and a photodetector, various types of optical compensation films, and the like are disposed on both faces of the display panel with built-in optical sensors 10. Note that in order to facilitate understanding of the structure, FIGS. 7A and 7B are enlarged views of the internal configuration of the display panel with built-in optical sensors 10.

Note that this transmissive-type liquid crystal display device may have a configuration in which, as shown in FIG. 7A, a shadow image (an image that is darker than the surrounding) formed due to external light is detected by the sensing pixels 12S disposed in the pixel region 1 when an object such as a person's finger is near the display panel screen, or a configuration in which, as shown in FIG. 7B, a reflected image (an image brighter than the surrounding) formed due to exiting light from the backlight 20 being reflected by an object is detected. In this way, whether a shadow image or a reflected image is detected is determined by the signal processing method performed in the signal processing circuit 8. Accordingly, a configuration is also possible in which the processing performed in the signal processing circuit 8 is switched between a shadow image detection mode and a reflected image detection mode.

Note that since sensor output is read from the sensing pixel 12S that is the correction target and a light-shield sensor pixel 12B simultaneously, Embodiment 1 has the advantage that disturbance attributed to time, such as cyclical power source fluctuations, can be accurately corrected. Also, since subtraction processing can be performed on read-out sensor output in almost real-time, there is no need to provide a line memory in the processing circuit in the sensor column driver 4, unlike other embodiments that are described later. The present embodiment therefore has the advantage that the circuit configuration is simple. There is also the advantage of having superior plane resolution in the Y direction.

Also, an exemplary configuration has been described in the present embodiment in which light-shielded sensor pixels are disposed in odd-numbered columns and sensing pixels are disposed in even-numbered columns. However, a configuration is possible in which, in the opposite manner, light-shielded sensor pixels are disposed in even-numbered columns and sensing pixels are disposed in odd-numbered columns. Also, although an exemplary case has been described in the present embodiment in which sensor output is simultaneously read out from two systems, the number of systems may be three or more.

### Embodiment 2

Next is a description of a configuration of a display panel with built-in optical sensors that is included in a liquid crystal display device according to Embodiment 2 of the present invention. Note that portions of the configuration that are similar to portions in the configuration described in Embodiment 1 have been given the same reference numerals as in Embodiment 1, and detailed descriptions thereof have been omitted.

As shown in FIG. 8, in the pixel region 1 of the display panel with built-in optical sensors according to the present embodiment, the light-shielded sensor pixels 12B are disposed in odd-numbered rows (row 1, row 3, row 5, ...) and the sensing pixels 12S are disposed in even-numbered rows (row 2, row 4, row 6, ...). In this configuration, sensor output from the light-shielded sensor pixels 12B disposed in an odd-numbered row is used to remove noise in the sensor output of the sensing pixels 12S in an adjacent even-numbered row.

In the present embodiment, sensor output S(x,2k) from the sensing pixels 12S in the even-numbered column (column 2k) is corrected by subtracting, from sensor output S(x,2k) from the sensing pixels 12S in the even-numbered row (row 2k), sensor output S(x,2k-1) from the light-shielded sensor pixels 12B in the odd-numbered row (row 2k-1) that is adjacent thereto.

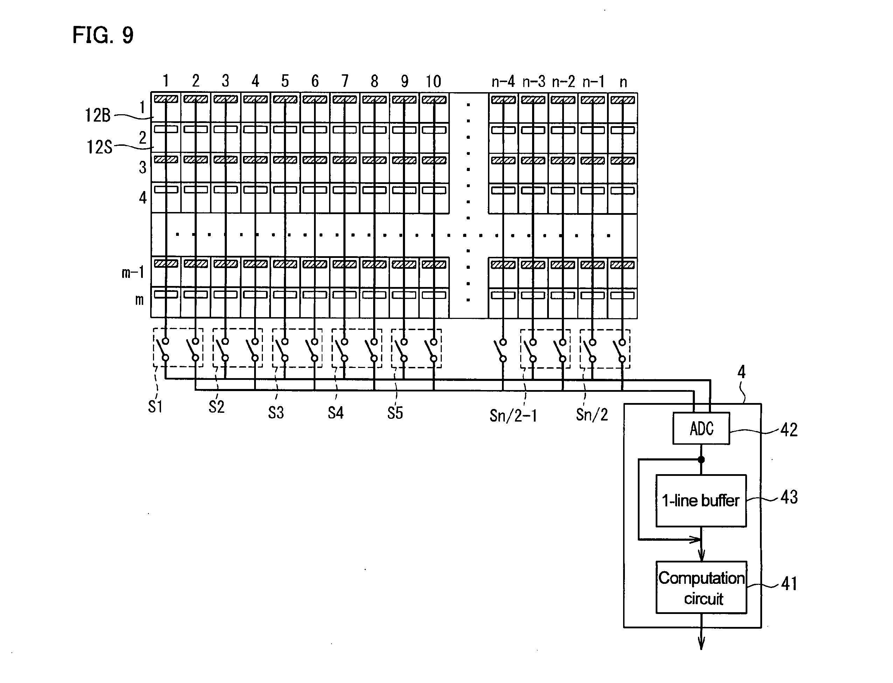

For this reason, a comparison with the configuration shown in FIG. 6 in Embodiment 1 shows that the display panel with built-in optical sensors according to the present embodiment as shown in FIG. 9 differs with respect to the internal configuration of the sensor column driver 4. As shown in FIG. 9, the sensor column driver 4 in the present embodiment includes a 1-line buffer 43 in addition to the computation circuit 41 and the AD convertor 42. The 1-line buffer 43 is a line buffer that can hold one row-worth of sensor output.

In this configuration, as the switches S1, S2, S3, ... S_{n/2} are sequentially turned on, sensor output S(2k-1,y) and S(2k,y) are output to the sensor column driver 4 from the pixels on the two source lines Gline that are connected to the switch Sk that is turned on, according to the row selection (here, it is assumed that the yth row (y being an even number) is selected) performed by the source row driver 5 (see FIG. 1). This sensor output is converted into digital signals by the AD convertor 42, and then sequentially held in the 1-line buffer. In this way, after the switches S1 to S_{n/2} have been sequentially turned on, the 1-line buffer holds one row-worth of sensor output.

Next, the source row driver 5 selects the next row (row (y-1)) and sequentially turns on the switches S1, S2, S3, ... S_{n/2}, and thus sensor output S(2k-1,y-1) and S(2k,y-1) is output to the sensor column driver 4. This sensor output is sent to the computation circuit 41. In the computation circuit 41, the sensor output S(2k-1,y-1) is subtracted from the sensor output S(2k-1,y) retrieved from the 1-line buffer 43. Likewise, the sensor output S(2k,y-1) is subtracted from the sensor output S(2k,y). Accordingly, sensor output of the sensing pixels 12S in an even-numbered row is corrected with use of sensor output of the light-shielded pixels 12B in an adjacent odd-numbered row. The result of the subtraction is output from the computation circuit 41 to the signal processing circuit 8 (see FIG. 1).

As described above, according to the present embodiment, sensor output from the light-shielded sensor pixels 12B in an odd-numbered row is subtracted from sensor output from the sensing pixels 12S disposed in an even-numbered row that is adjacent thereto, thus correcting the sensor output of the sensing pixels 12S. Accordingly, noise removal can be performed using output from a light-shielded sensor that is disposed very close to the sensing pixel 12S that is the correction target, thus enabling accurately removing noise components in sensor output from sensing pixels without being influenced by distance from a heat source or distance from a sensor output terminal.

Note that the display panel with built-in optical sensors according to the present embodiment has the advantage that, compared to Embodiment 1, although the 1-line buffer 43 is necessary in the sensor column driver 4, it is possible to remove not only noise attributed to changes in the environmental temperature, but also system noise (e.g., kickback due to switches and amplifier offset) on the sensor output lines (Gline). There is also the advantage of having superior plane resolution in the X direction.

Also, an exemplary configuration has been described in the present embodiment in which light-shielded sensor pixels are disposed in odd-numbered rows and sensing pixels are disposed in even-numbered rows. However, a configuration is possible in which, in the opposite manner, light-shielded sensor pixels are disposed in even-numbered rows and sensing pixels are disposed in odd-numbered rows.

### Embodiment 3

Next is a description of a configuration of a display panel with built-in optical sensors that is included in a liquid crystal display device according to Embodiment 3 of the present invention. Note that portions of the configuration that are similar to portions in the configurations described in Embodiments 1 and 2 have been given the same reference numerals as in Embodiments 1 and 2, and detailed descriptions thereof have been omitted.

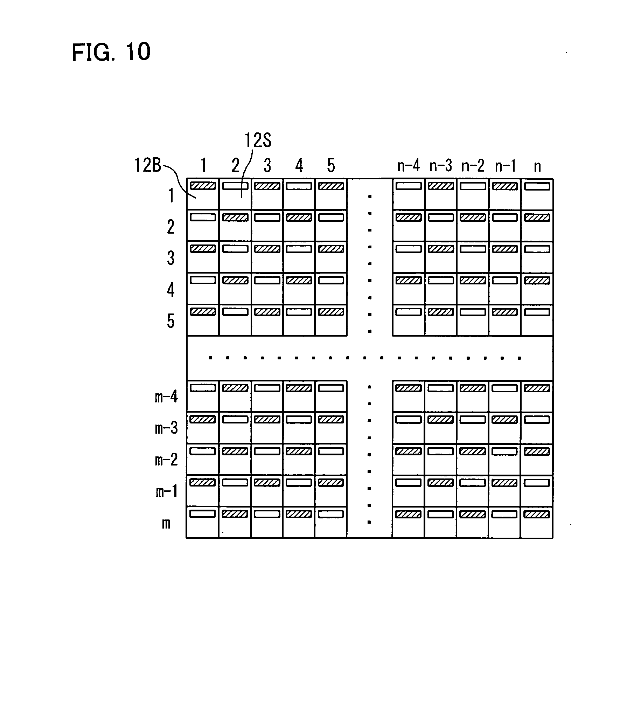

As shown in FIG. 10, in the pixel region 1 of the display panel with built-in optical sensors of the present embodiment, the light-shielded sensor pixels 12B and the sensing pixels 12S are disposed so as to alternate in both the row direction and the column direction. Each sensing pixels 12S is surrounded by four light-shielded sensor pixels 12B in four directions, namely up, down, to the left, and to the right. Accordingly, the display panel with built-in optical sensors of the present embodiment corrects the sensor output of a sensing pixel 12S with use of the sensor output of at least one of these four light-shielded sensors.

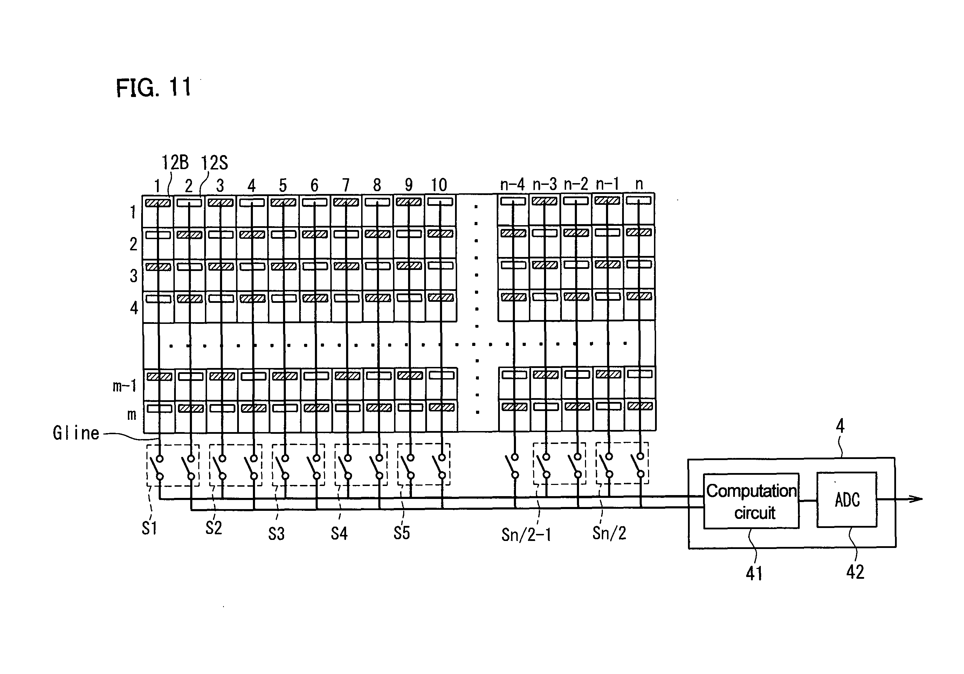

For example, in the configuration shown in FIG.11, sensor output S(x,y) from a sensing pixel 12S is corrected with use of sensor output S(x-1,y) or S(x+1,y) from a light-shielded sensor pixel 12B in a column that is adjacent on the left or right of the sensing pixel 12S. Specifically in the configuration shown in FIG. 11, the computation circuit 41 corrects sensor output from the sensing pixels 12S by subtracting, from sensor output S(x,y) from the sensing pixels 12S in the odd-numbered rows (y=1, 3, 5, ..., m-1), sensor output S(x-1,y) from the light-shielded sensor pixels 12B in the column to the left. Also, as for sensor output S(x,y) from the sensing pixels 12S in the even-numbered rows (y=2, 4, 6, ..., m), the computation circuit 41 corrects sensor output from the sensing pixels 12S by subtracting, from this sensor output S(x,y), sensor output S(x+1,y) from the light-shielded sensor pixels 12B in the column to the right. Note that in the configuration in FIG. 11 as well, the connection sequence of the computation circuit 41 and the AD convertor 42 may be reversed.

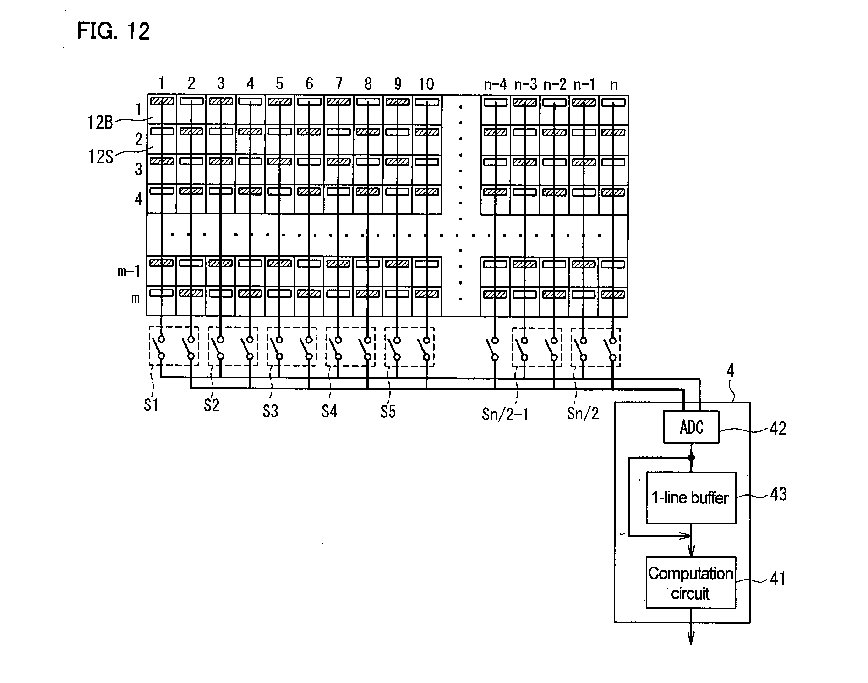

Also, in the configuration shown in FIG. 12, sensor output S(x,y) from a sensing pixel 12S is corrected with use of sensor output S(x,y-1) or S(x,y+1) from a light-shielded sensor pixel 12B in a row that is adjacent above or below the sensing pixel 12S. Specifically, in the configuration shown in FIG. 12, the computation circuit 41 corrects sensor output from the sensing pixels 12S by subtracting, from sensor output S(x,y) from the sensing pixels 12S in the odd-numbered columns (x=1, 3, 5, ..., n-1), sensor output S(x,y-1) from the light-shielded sensor pixels 12B in the row thereabove. Also, as for sensor output S(x,y) from the sensing pixels 12S in the even-numbered columns (x=2,4, 6, ..., n), the computation circuit 41 corrects sensor output from the sensing pixels 12S by subtracting, from this sensor output S(x,y), sensor output S(x,y+1) from the light-shielded sensor pixels 12B in the row therebelow.

Also, a display panel with built-in optical sensors that can switch between a mode of correction using sensor output of light-shielded sensor pixels in adjacent columns (on the left/right) as shown in FIG.11, and a mode of correction using sensor output of light-shielded sensor pixels in adjacent rows (above/below) as shown in FIG. 12 is also an embodiment of the present invention. In this case, it is sufficient for the configuration to be such that the sensor column driver 4 includes both the circuitry shown in FIG. 11 and the circuitry shown in FIG. 12, and the circuitry that is used is switched according to the operating mode.

As described above, according to the present embodiment as well, sensor output of sensing pixels is corrected using sensor output of light-shielded sensors in adjacent rows or adjacent columns, thus enabling accurately removing noise components in sensor output from sensing pixels without being influenced by distance from a heat source or distance from a sensor output terminal. Also, there is the advantage that it is possible to remove system noise (e.g., kickback due to switches and amplifier offset) on the sensor output lines (Gline) as well. There is also the advantage of having superior plane resolution in both the X direction and the Y direction.

Although embodiments of the present invention have been described above, the present invention is not limited to only the above-described concrete examples, and various modifications within the scope of the invention are possible.

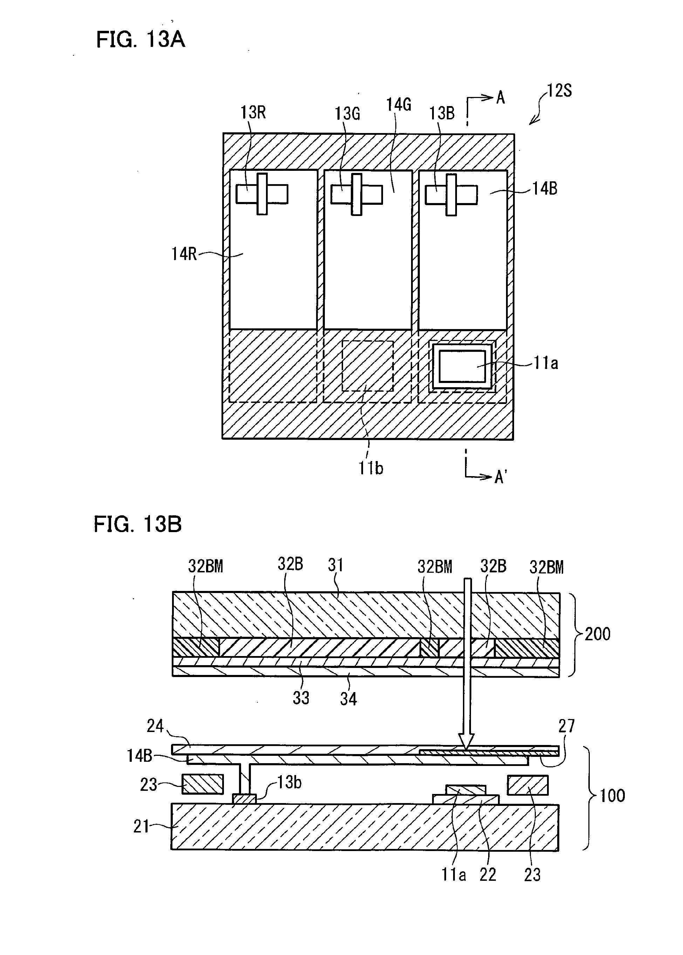

For example, an exemplary configuration has been described in the above embodiments in which the light-shielded sensors are formed using the black matrix of the counter substrate, as shown in FIGS. 2A and 2B. However, the light-shielded sensors may be formed by providing a reflective metal film 27 or the like on the active matrix substrate 100 side, as shown in FIGS. 13A and 13B. Note that the method of shielding the sensors from light is not limited to such methods, and various well-known techniques can be used.

Also, in the above embodiments, examples of configurations have been given in which every pixel is provided with one optical sensor 11. However, an optical sensor does not necessarily need to be provided in every pixel. For example, a configuration is possible in which optical sensors are formed in every other row or every other column, and such a configuration is also included in the technical scope of the present invention. Also, the ratio between sensing pixels and light-shielded sensor pixels does not necessarily need to be even. For example, a configuration is possible in which light-shielded sensor pixels are disposed in every third row or every third column, and sensor output of light-shielded sensor pixels in each row or each column is used to correct sensor output of sensing pixels on both sides of the row or column.

Furthermore, a configuration is possible in which sensor output of one light-shielded sensor pixel is used to correct sensor output of multiple sensing pixels in the surrounding vicinity thereof

### Industrial Applicability

The present invention is industrially applicable as a display device having optical sensors.

## Claims

1. A display panel with built-in optical sensors that has an active matrix substrate having a pixel region in which pixels are disposed in a matrix, the optical sensors being formed in at least a portion of the pixel region,
wherein among the optical sensors in the pixel region are image pick-up sensors and light-shielded sensors that are shielded from light, and
the display panel further comprises a correction circuit that corrects sensor output of the image pick-up sensors with use of sensor output from the light-shielded sensors.

2. The display panel with built-in optical sensors according to claim 1,
wherein the light-shielded sensors are disposed having predetermined regularity in the pixel region, and
the correction circuit corrects sensor output of the image pick-up sensors with use of sensor output of light-shielded sensors disposed within a predetermined range in a vicinity of the image pick-up sensors.

3. The display panel with built-in optical sensors according to claim 2,
wherein the light-shielded sensors are disposed in predetermined rows or columns in the pixel region, and
the correction circuit corrects sensor output of the image pick-up sensors with use of sensor output of light-shielded sensors disposed in a predetermined row or column in the vicinity of the image pick-up sensors.

4. The display panel with built-in optical sensors according to claim 3,
wherein the image pick-up sensors and the light-shielded sensors are disposed in alternating columns in the pixel region, and
the correction circuit corrects sensor output of the image pick-up sensors with use of sensor output of light-shielded sensors disposed in a column adjacent to the image pick-up sensors.

5. The display panel with built-in optical sensors according to claim 3,
wherein the image pick-up sensors and the light-shielded sensors are disposed in alternating rows in the pixel region, and
the correction circuit corrects sensor output of the image pick-up sensors with use of sensor output of light-shielded sensors disposed in a row adjacent to the image pick-up sensors.

6. The display panel with built-in optical sensors according to claim 2,
wherein the image pick-up sensors and the light-shielded sensors are disposed so as to alternate in both a row direction and a column direction in the pixel region, and
the correction circuit corrects sensor output of the image pick-up sensors with use of sensor output from at least any of light-shielded sensors that are adjacent to the image pick-up sensors.
